# FASCICULE DE BREVET EUROPEEN

(11) **EP 2 567 944 B1**
(45) Date de publication et mention de la délivrance du brevet: **01.07.2015**
(21) Numéro de dépôt: 12179883.9
(22) Date de dépôt: 09.08.2012
(51) Int. Cl.: C02F 9/00, C02F 1/00

(54) **Installation et procédé de traitement et de distribution d'eau**
Anlage und Verfahren zur Aufbereitung und Verteilung von Wasser
System and method for treating and distributing water

(30) Priorité: 09.09.2011 FR 1158030
(43) Date de publication de la demande: 13.03.2013
(73) Titulaire: Opuntias, 56038 Vannes Cedex (FR)
(72) Inventeur: Augereau, Jean-Paul, 56450 SURZUR (FR)
(74) Mandataire: Godineau, Valérie

(56) Documents cités:
- WO-A1-2006/108326
- DE-U1- 9 109 162
- DE-U1-202011 004 813
- US-A1- 2009 065 442

## Description

Elle concerne plus particulièrement une installation de traitement du type comprenant :
- un bac disconnecteur équipé d'une entrée obturable d'alimentation en eau raccordable à une source d'eau et d'un trop-plein,
- au moins un ballon à vessie alimenté en entrée à partir du bac disconnecteur par l'intermédiaire de moyens de pompage disposés généralement entre ballon à vessie et bac disconnecteur et raccordable en sortie à un circuit de distribution d'eau,
- des moyens de traitement de l'eau disposés entre le bac disconnecteur et le ou au moins un ballon à vessie, au moins le bac disconnecteur étant logé à l'intérieur d'une enceinte, de préférence de type armoire.

Une telle installation est décrite dans la demande de brevet FR 2.959.762 du présent demandeur.

L'intérêt d'une telle installation est de pouvoir alimenter le bac disconnecteur à partir de différentes sources d'eau, telles que l'eau du réseau, les eaux pluviales ou une eau de forage.

Une telle installation ne permet pas une alimentation du bac disconnecteur à partir d'eaux dites grises

En parallèle, des stations de traitement permettent le traitement des eaux, dites grises, par exemple les eaux de lavage avant une redistribution de cette eau traitée, ce qui permet une économie d'eau. Ces stations sont généralement formées de cuves ou bacs disposés côte à côte, de sorte que l'encombrement de la station est important. En outre, de telles stations nécessitent, du fait de leur conception, une maintenance quotidienne.

Un but de la présente invention est donc de proposer une installation de traitement et de distribution d'eau du type précité dite mixte dont la conception permet de disposer, pour un encombrement réduit de l'installation, des avantages des deux types d'installation précités en vue de permettre une alimentation de l'installation en eaux dites grises ou non.

Un autre but de la présente invention est de proposer une installation de traitement et de distribution d'eau du type précité dont la conception permet une autonomie importante et une maintenance réduite de ladite installation.

Un autre but de la présente invention est de proposer une installation de traitement et de distribution d'eau du type précité dont la conception permet un fonctionnement de l'installation avec un nombre de pompes réduit.

A cet effet, l'invention a pour objet une installation de traitement et de distribution d'eau du type comprenant un bac disconnecteur équipé d'une entrée obturable d'alimentation en eau raccordable à une source d'eau et d'un trop-plein, au moins un ballon à vessie alimenté en entrée à partir du bac disconnecteur et raccordable en sortie à un circuit de distribution d'eau, des moyens de traitement de l'eau disposés entre le bac disconnecteur et le ou au moins un ballon à vessie, au moins le bac disconnecteur étant logé à l'intérieur d'une enceinte, de préférence de type armoire, **caractérisée en ce que** ladite installation comprend en outre des moyens de stockage d'eau, dite grise, surmontant des moyens de coagulation d'au moins une partie des impuretés contenues dans ladite eau, eux-mêmes surmontant des moyens de filtration de la solution coagulée, ces moyens de stockage, de coagulation, et de filtration superposés étant disposés au-dessus du bac disconnecteur, pour une alimentation, généralement par le dessus, du bac disconnecteur à partir des moyens de filtration par écoulement gravitaire, les moyens de stockage, de coagulation, et de filtration comportant chacun au moins une cuve munie d'une entrée d'alimentation en fluide, d'une sortie d'évacuation de fluide et, pour les cuves des moyens de stockage et de coagulation, d'un trop-plein.

La disposition à l'état superposé des moyens de stockage d'eau grise, de coagulation et de filtration dont les cuves communiquent entre elles par des liaisons généralement obturables permet un encombrement réduit de l'ensemble et une présentation de l'installation sous forme d'une armoire modulaire ou non apte à être installée rapidement. Cet encombrement réduit et cette présentation facilitent la généralisation d'une telle installation apte à être disposée auprès de collectivités, telles qu'hôtels ou maisons individuelles.

De préférence, les trop-pleins des moyens de stockage d'eau et des moyens de coagulation débouchent dans un collecteur de trop-pleins commun se présentant sous forme d'un conduit, de type colonne, et le trop-plein des moyens de coagulation délimite, entre la cuve des moyens de coagulation et le collecteur de trop-pleins, un circuit de circulation de fluide muni d'un venturi apte à permettre la vidange partielle de la cuve des moyens de coagulation sous l'action d'un flux de fluide issu du trop-plein des moyens de stockage d'eau grise et circulant à l'intérieur du collecteur de trop-pleins.

Grâce à cette conception, les caillots ou amas formés qui tendent à flotter en surface de la cuve, au niveau du trop-plein de la cuve, sont évacués par le trop-plein de ladite cuve. Cette évacuation des amas ou caillots qui forment l'essentiel des impuretés de l'eau permet de réduire de manière simple et rapide, la charge en impuretés de l'eau, ce qui facilite les opérations ultérieures de filtration et réduit le risque d'un colmatage ou encrassage rapide des moyens de filtration. L'utilisation d'un venturi qui joue le rôle d'organe d'obturation du trop-plein apte à passer de l'état actif d'obturateur à l'état inactif sous le seul effet d'un flux de circulation dans le collecteur de trop-plein permet de commander de manière fiable et simple l'évacuation des caillots ou amas de la cuve des moyens de coagulation sans augmenter l'encombrement de l'ensemble et sans nécessiter une pompe supplémentaire.

Le collecteur de trop-pleins commun, extérieur aux cuves des moyens de stockage et de coagulation s'étend sur au moins une partie de la hauteur de la pile formée par la superposition des moyens de stockage de filtration de coagulation et du bac disconnecteur. En particulier, le collecteur de trop-pleins s'étend parallèlement à une paroi latérale desdites cuves, ladite paroi latérale de chaque cuve correspondant à la paroi de la cuve reliant la face du dessus et la face du dessous de la cuve. En particulier encore, le collecteur de trop-pleins se présente sous forme d'un conduit disposé le long d'une des parois latérale de l'enceinte de l'armoire modulaire ou non de l'installation.

De préférence, la sortie d'évacuation de la cuve des moyens de stockage d'eau grise est raccordée à l'entrée d'alimentation de la cuve des moyens de coagulation par une liaison obturable, la sortie d'évacuation de la cuve des moyens de coagulation est raccordée à l'entrée d'alimentation de la cuve des moyens de filtration par une liaison obturable, et lesdites liaisons obturables, en particulier la partie desdites liaisons comprenant les moyens d'obturation de la liaison, sont, de préférence, disposées au moins partiellement à l'extérieur desdites cuves. De préférence encore, la partie desdites liaisons comprenant les moyens d'obturation de la liaison est disposée au moins partiellement à l'extérieur de l'enceinte.

La présence de moyens d'obturation pilotables au niveau des liaisons des cuves des moyens de stockage, de coagulation, et de filtration qui communiquent entre elles permet d'une part, un contrôle parfait du flux et, en particulier, de son passage d'une cuve à une autre, d'autre part, l'obtention de niveaux de remplissage des cuves correspondant à ceux souhaités. La disposition des moyens d'obturation à l'extérieur des cuves permet d'en faciliter la maintenance. La superposition des cuves permet un transfert par écoulement gravitaire d'une cuve à une autre, une fois la liaison ouverte.

L'installation comporte en outre une unité de pilotage et de surveillance de l'installation et une pompe, de préférence de relevage, d'alimentation en eau des moyens de stockage d'eau grise, ladite unité de pilotage, de préférence logée au moins partiellement à l'intérieur de l'enceinte, étant munie de moyens d'émission-réception de signaux aptes à émettre au moins des signaux de commande, ladite pompe étant une pompe pilotée, apte à être pilotée à partir desdits signaux de commande, ladite pompe comportant au moins un mode de fonctionnement dans lequel ladite pompe, à fonction d'organe de commande de la vidange partielle de la cuve des moyens de coagulation, est configurée pour remplir la cuve des moyens de stockage d'eau grise à un niveau de remplissage au moins égal au niveau du trop-plein de ladite cuve.

L'utilisation de la pompe qui sert à l'alimentation en eau des moyens de stockage d'eau grise comme moyen de commande de la vidange de la cuve des moyens de coagulation entraîne à nouveau une simplification de l'installation et un coût réduit de l'installation. La vidange de la cuve des moyens de coagulation ne nécessite donc pas d'actionneur supplémentaire.

De préférence, les moyens de coagulation sont des moyens de coagulation par électrocoagulation.

Bien que la coagulation puisse s'opérer, par coagulation chimique à l'aide d'agents de coagulation ajoutés dans la cuve des moyens de coagulation, ou bien encore par ozonisation, ou par photocatalyse, l'électrocoagulation est préférée.

De préférence, la cuve des moyens de stockage d'eau grise et le bac disconnecteur présentent une contenance maximale supérieure à celle des cuves des moyens de coagulation et de filtration.

L'invention a encore pour objet un procédé de traitement et de distribution d'eau à l'aide d'une installation du type précité, ladite installation fonctionnant par cycle de traitement **caractérisé en ce que**, au cours d'un cycle de traitement, le procédé comprend au moins :
- une étape de remplissage de la cuve des moyens de stockage d'eau grise,
- une étape de transfert d'au moins une partie du contenu de la cuve des moyens de stockage dans la cuve des moyens de coagulation jusqu'à atteindre, dans ladite cuve des moyens de coagulation, un niveau de remplissage au moins égal au niveau du trop-plein,
- une étape de maintien de l'eau dans la cuve des moyens de coagulation pendant la durée nécessaire à la coagulation d'au moins une partie des impuretés contenues dans l'eau,
- une étape de vidange partielle de la cuve des moyens de coagulation par remplissage de la cuve des moyens de stockage d'eau grise à un niveau de remplissage au moins égal au niveau du trop-plein de ladite cuve pour un déversement d'une partie du contenu de la cuve des moyens de stockage d'eau grise dans le collecteur de trop-pleins,
- une étape de transfert du reste du contenu de la cuve des moyens de coagulation dans la cuve des moyens de filtration,
- une étape de transfert par écoulement gravitaire d'au moins une partie du contenu de la cuve des moyens de filtration dans le bac disconnecteur.

L'invention sera bien comprise à la lecture de la description suivante d'exemples de réalisation, en référence aux dessins annexés dans lesquels :
la figure 1 représente une vue schématique d'une installation de traitement conforme à l'invention ;
la figure 2 représente une vue de détail du trop-plein de la cuve des moyens de coagulation de l'installation représentée à la figure 1.

Comme mentionné ci-dessus, l'installation, objet de l'invention, est plus particulièrement destinée au traitement d'eau grise et à la distribution de l'eau grise traitée ou d'eau de réseau, d'eau pluviale ou d'eau de forage lorsque la quantité d'eau grise traitée est insuffisante pour répondre à la demande de distribution.

Comme mentionné ci-dessus, l'installation comprend :
- un bac 1 disconnecteur équipé d'une entrée 2 obturable d'alimentation en eau raccordable à une source 3 d'eau et d'un trop-plein 5, au moins un ballon 8 à vessie alimenté en entrée à partir du bac 1 disconnecteur par l'intermédiaire de moyens 9 de pompage disposés entre ballon 8 à vessie et bac 1 disconnecteur et raccordable en sortie à un circuit 10 de distribution d'eau,
- et des moyens 11 de traitement de l'eau disposés entre le bac 1 disconnecteur et le ou au moins un ballon 8 à vessie.

Au moins le bac 1 disconnecteur est logé à l'intérieur d'une enceinte 7, de préférence de type armoire. Dans l'exemple représenté, le ballon 8 à vessie, les moyens de pompage disposés entre ballon 8 à vessie et bac 1 disconnecteur et les moyens 11 de traitement de l'eau disposés entre le bac 1 disconnecteur et le ballon 8 à vessie sont tous disposés à l'intérieur de l'enceinte 7.

De manière caractéristique à l'invention, l'installation comprend en outre des moyens de stockage 12 d'eau, dite grise, surmontant des moyens de coagulation 17 d'au moins une partie des impuretés contenues dans ladite eau, eux-mêmes surmontant des moyens de filtration 25 de la solution coagulée, ces moyens de stockage 12, de coagulation 17 et de filtration 25 superposés étant disposés au-dessus du bac 1 disconnecteur pour une alimentation, généralement par le dessus, du bac 1 disconnecteur à partir des moyens de filtration 25 par écoulement gravitaire. Les moyens de stockage 12 de coagulation 17, et de filtration 25 comportant chacun au moins une cuve 13 ; 18 ; 26 munie d'une entrée 14 ; 19 ; 27 d'alimentation, d'une sortie 15 ; 20 ; 28 d'évacuation et, pour les cuves 13 ; 18 des moyens de stockage 12 et de coagulation 17, d'un trop-plein 16, 21.

Dans l'exemple représenté, l'enceinte 7 du type armoire logeant le bac 1 disconnecteur est formée d'un boîtier de forme générale parallélépipédique. L'armoire est de type monobloc et l'enceinte 7 de l'armoire loge également au moins partiellement les moyens de stockage 12, de coagulation 17 et de filtration 25. En variante, l'armoire peut être de type modulaire et être formée d'une pluralité de modules superposés délimitant chacun une enceinte. L'enceinte du module supérieur peut loger partiellement les moyens de stockage 12, l'enceinte du module intermédiaire peut loger au moins partiellement les moyens de coagulation 17 et de filtration 25 tandis que l'enceinte du module inférieur peut loger au moins partiellement le bac 1 disconnecteur.

Dans l'exemple représenté, cette armoire comporte un plancher, une face de dessus et des faces latérales formant respectivement la façade, le dos et les côtés de l'armoire. Cette armoire présente une façade ouverte fermée par l'intermédiaire de deux portes ouvrant à la française. Les côtés de l'armoire sont quant à eux généralement pourvus d'orifices permettant un accès, en particulier aux cuves des moyens de stockage, de coagulation et de filtration comme cela sera décrit ci-après.

Dans le cas d'une armoire modulaire, l'armoire comporte de manière similaire un plancher, une face de dessus et des faces latérales formant respectivement la façade, le dos et les côtés de l'armoire. Chaque module constitutif de l'armoire ouvert en façade est muni de ses propres portes pour permettre la fermeture de ladite façade.

Dans l'exemple représenté, les cuves des moyens de stockage, de coagulation et de filtration et le bac 1 disconnecteur sont donc superposés, la cuve des moyens de stockage formant le haut de la pile, le bac disconnecteur le bas de la pile. La cuve 13 des moyens de stockage 12 d'eau grise et le bac 1 disconnecteur présentent une contenance maximale supérieure à celle des cuves 18, 26 des moyens de coagulation 17 et de filtration 25. Dans les exemples représentés, la cuve 13 des moyens de stockage 12 d'eau grise et le bac 1 disconnecteur présentent une contenance au moins égale à deux fois celle des cuves des moyens de coagulation et de filtration.

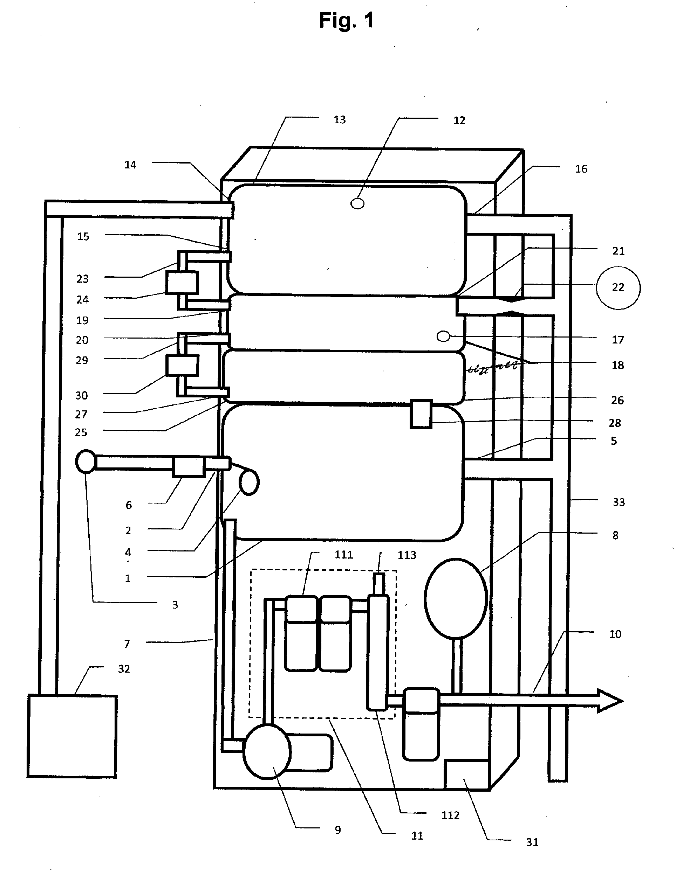

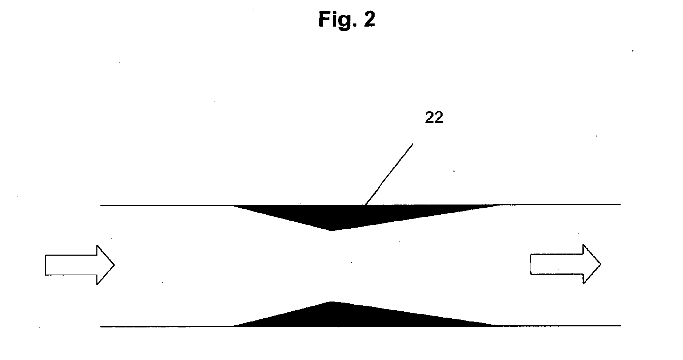

Les trop-pleins 16, 21 des cuves des moyens de stockage d'eau grise et des moyens de coagulation débouchent dans un collecteur 33 de trop-plein commun. Ce collecteur 33 de trop-pleins se présente sous forme d'un conduit de type colonne, c'est-à-dire sous forme d'un conduit à axe vertical pour un écoulement gravitaire. Ce collecteur de trop-pleins est disposé le long d'une des parois latérales de l'enceinte, en l'occurrence le long de l'un des côtés de l'enceinte, à savoir le côté de droite à la figure 1. Ce collecteur 33 est, de préférence, disposé à l'extérieur de l'enceinte 7 et s'étend sensiblement parallèlement à la paroi latérale formant un côté de l'enceinte comme l'illustrent les figures. Grâce à la configuration essentiellement verticale de ce collecteur 33 de trop-pleins, dont le contenu balaye le débouché du trop-plein des moyens de coagulation dans ledit collecteur, et au fait que le circuit de circulation de fluide délimité par le trop-plein 21 des moyens de coagulation 17 est muni d'un venturi 22, c'est-à-dire d'un étranglement sur le circuit, comme l'illustre la figure 2, il est possible de vidanger partiellement la cuve 18 des moyens de coagulation 17 sous l'action d'un flux de fluide issu du trop-plein 16 des moyens de stockage 12 d'eau grise et circulant à l'intérieur du collecteur 33 de trop-plein.

Une telle vidange ne fonctionne que si le niveau de remplissage de la cuve 18 des moyens de coagulation est suffisant et en particulier atteint le niveau du trop-plein de la cuve.

Pour permettre une communication entre cuves des moyens de stockage 12 de coagulation 17 et de filtration 25 et un transfert de fluide par écoulement gravitaire entre cuves, la sortie 15 d'évacuation de la cuve 13 des moyens de stockage 12 d'eau grise est raccordée à l'entrée 19 d'alimentation de la cuve 18 des moyens de coagulation 17 par une liaison 23 obturable et la sortie 20 d'évacuation de la cuve 18 des moyens de coagulation 17 est raccordée à l'entrée 27 d'alimentation de la cuve 26 des moyens de filtration 25 par une liaison 29 obturable. Lesdites liaisons 23, 29 obturables, en particulier la partie desdites liaisons comprenant les moyens 24 ; 30 d'obturation de la liaison 23 ; 29, sont disposées au moins partiellement à l'extérieur desdites cuves 13, 18, 26, au moins partiellement à l'extérieur de l'enceinte 7, comme l'illustrent les figures.

Les moyens d'obturation sont ici formés d'électrovannes. L'installation comporte en outre une unité 31 de pilotage et de surveillance de l'installation et une pompe 32, de préférence de relevage, d'alimentation en eau des moyens de stockage 12 d'eau grise, ladite unité 31 de pilotage étant logée au moins partiellement à l'intérieur de l'enceinte 7 et munie de moyens d'émission-réception de signaux aptes à émettre au moins des signaux de commande d'au moins une partie des autres éléments de l'installation. Ainsi, la pompe 32 de relevage est une pompe pilotée, apte à être pilotée à partir desdits signaux de commande de l'unité 31 de pilotage, ladite pompe 32 comportant au moins un mode de fonctionnement dans lequel ladite pompe 32, à fonction d'organe de commande de la vidange partielle de la cuve 18 des moyens 17 de coagulation, est configurée pour remplir la cuve 13 des moyens de stockage 12 d'eau grise à un niveau de remplissage au moins égal au niveau du trop-plein 16 de ladite cuve 13.

La pompe de relevage comporte également un mode de fonctionnement dans lequel ladite pompe est configurée pour remplir la cuve 13 des moyens de stockage 12 à un niveau inférieur au niveau du trop-plein 16 de ladite cuve 13. En pratique, les eaux grises à traiter sont amenées par la pompe 32 de relevage en un seul flux ou en plusieurs flux successifs dans la cuve 13 des moyens de stockage 12. Lorsque le volume d'eau de la cuve 13 des moyens de stockage 12 est suffisant, l'eau à traiter est transférée dans la cuve 18 des moyens de coagulation 17 par la liaison 23, reliant la sortie 15 de la cuve 13 des moyens de stockage à l'entrée 19 de la cuve 18 des moyens de coagulation, et dont l'électrovanne 24 est commandée en ouverture. Une fois le transfert opéré, un nouveau remplissage de la cuve 13 des moyens de stockage à l'aide de la pompe 32 de relevage peut être opéré en fonction de la disponibilité en eaux grises. Dans la cuve 18 des moyens de coagulation 17, la coagulation, en particulier la floculation s'opère de préférence par électrocoagulation.

Généralement, l'électrocoagulation nécessite un temps de réaction de l'ordre de 20 minutes. Les caillots ou amas formés flottent à la surface de la cuve 18 des moyens de coagulation. Lorsque le temps de réaction est écoulé, une vidange de la cuve des moyens de coagulation et un transfert du contenu de la cuve vers les moyens de filtration peuvent être envisagés. Au préalable, il est nécessaire d'éliminer au moins une partie des caillots pour éviter un colmatage ou encrassement trop rapide des moyens de filtration. Pour permettre une telle élimination des amas ou caillots, on commande, à l'aide de la pompe de relevage, le remplissage de la cuve 13 des moyens de stockage 12 jusqu'à atteindre un niveau de remplissage qui entraîne un déversement d'une partie du contenu de la cuve 13 des moyens de stockage 12 par le trop-plein 16 de ladite cuve dans le collecteur 33 de trop-pleins. Ce flux de fluide entraîne le flux de fluide contenu dans le trop-plein 21 de la cuve 18 des moyens de coagulation 17 à se déverser dans le collecteur 33 de trop-pleins en emmenant avec lui une partie du contenu de la cuve 18 des moyens de coagulation 17. Les caillots ou amas sont donc éliminés par ce trop-plein. Le reste du contenu de la cuve 18 des moyens de coagulation 17 est transféré à la cuve 26 des moyens de filtration 25 par la liaison obturable 29. La solution coagulée sort donc de la cuve 18 des moyens de coagulation 17 par la sortie 20 avant d'entrer dans la cuve 26 des moyens de filtration 25 par l'entrée 27, l'électrovanne 30 obturant la liaison 29 étant ouverte. Lorsque le transfert de fluide est achevé, l'électrovanne 30 est refermée et un nouveau remplissage de la cuve 18 des moyens de coagulation 17 peut être envisagé de manière similaire à ce qui a été décrit ci-dessus. Les moyens de filtration 25 comprennent au moins un filtre à sable. En l'occurrence, ces moyens de filtration 25 comportent généralement, à l'intérieur de la cuve 26 des moyens de filtration 25, au niveau de sa face formant fond, une sortie d'évacuation disposée à la verticale du bac 1 disconnecteur et, à l'intérieur de ladite cuve 26, un panier suspendu. Ce panier ajouré est tapissé d'un géotextile et rempli de sable. Ce panier ajouré est logé de manière amovible dans la cuve 26 des moyens de filtration 25, ce qui facilite la maintenance des moyens de filtration 25 puisqu'il suffit de sortir le panier de la cuve après extraction de la cuve à la manière d'un tiroir et de remplacer son contenu avant de le réinsérer dans la cuve ou de remplacer le panier par un autre panier à la manière d'un consommable. Dans la cuve 26 des moyens de filtration 25, l'eau traverse le lit de sable puis pénètre dans le bac 1 disconnecteur par la face du dessus du bac 1 disconnecteur. Ce bac 1 disconnecteur comporte par ailleurs une entrée 2 d'alimentation en eau qui permet un remplissage du bac 1 disconnecteur en eau de réseau ou en eau pluviale ou en eau de forage lorsque l'apport en eau par les moyens de filtration est insuffisant par rapport à la distribution d'eau souhaitée. A cet effet, le bac 1 disconnecteur est équipé d'un organe 6, tel qu'une électrovanne, d'obturation de son entrée 2 d'alimentation en eau, cette électrovanne 6 étant commandée en ouverture par l'unité 31 de pilotage de l'installation lorsqu'une demande de distribution est émise côté distribution d'eau et que le niveau d'eau à l'intérieur du bac 1 disconnecteur est insuffisant. On note, dans les exemples représentés, que le débouché de l'entrée 2 d'alimentation en eau du bac 1 disconnecteur est disposé au-dessus du trop-plein 5, et est écarté du niveau d'eau maximal du bac 1 disconnecteur défini par le trop-plein 5 d'une distance au moins égale à 5 cm de manière à éviter toute contamination de la source 3 d'eau par le contenu du bac 1 disconnecteur. Le trop-plein 5 du bac 1 disconnecteur est encore équipé de moyens de raccordement au collecteur 33 commun de trop-pleins.

Bien évidemment, ce bac 1 disconnecteur est équipé de capteurs de niveau pour permettre une telle gestion. Dans les exemples représentés, le bac 1 disconnecteur est encore équipé, en aval de l'organe 6 d'obturation de l'entrée 2 d'alimentation en eau du bac 1 disconnecteur, d'un organe 4 d'obturation à flotteur faisant office d'organe de sécurité. L'eau issue du bac 1 disconnecteur traverse des moyens 11 de traitement de l'eau avant d'être stockée dans un ballon 8 à vessie ou directement distribuée.

Dans l'exemple représenté, les moyens 11 de traitement de l'eau comprennent au moins des moyens 111 de filtration de l'eau et des moyens 112 d'émission de rayons UV, tels qu'une lampe UV Les moyens 112 d'émission de rayons UV sont associés à des moyens 113 de contrôle de rayonnement des UV Ces moyens 113 de contrôle comprennent au moins une photorésistance apte à émettre un signal d'alerte en direction de l'unité de pilotage et de surveillance lorsque la résistivité de la photorésistance, fonction de la quantité de lumière incidente émise par les moyens 112 d'émission de rayons UV, est inférieure à une valeur prédéterminée. Il est ainsi possible de détecter à distance une défaillance de la lampe UV ou un traitement insuffisant de l'eau qui amène une turbidité de l'eau telle que celle-ci est détectée par la photorésistance.

Pour accroître la fiabilité de l'installation, celle-ci comporte encore, entre bac 1 disconnecteur et zone de raccordement du au moins un ballon 8 à vessie au circuit de circulation de distribution d'eau, des moyens de mesure de la pression du circuit d'eau en lien avec l'unité de pilotage et de surveillance. Lesdits moyens de mesure sont aptes à émettre un signal d'alerte en direction de l'unité de pilotage et de surveillance dans des conditions de pression prédéterminées. Dans les exemples représentés, ces moyens de mesure de la pression sont formés par un pressostat disposé en amont du ballon à vessie.

Comme mentionné ci-dessus, pour permettre le fonctionnement et garantir la fiabilité de l'installation, l'installation comporte une unité de pilotage et de surveillance logée au moins partiellement à l'intérieur de l'enceinte 7. Cette unité de pilotage et de surveillance, qui est munie de moyens d'émission de signaux aptes à émettre des signaux de commande, est également munie de moyens d'émission de signaux aptes à émettre des signaux d'alarme, en particulier en direction d'au moins un récepteur situé hors de l'enceinte 7. Cette unité de pilotage et de surveillance est en outre équipée de moyens de réception de signaux, en particulier de moyens de réception des signaux d'alerte émis par les différents organes logés à l'intérieur de l'enceinte. Généralement, cette unité 31 de pilotage et de surveillance est intégrée à une porte de l'enceinte 7 et comporte des écrans d'affichage ou organes de réglage accessibles côté visible de la porte, tandis que le reste de l'unité de pilotage et de surveillance s'étend face cachée de ladite porte en position fermée des portes. Cette unité de pilotage et de surveillance comporte des moyens de pilotage incluant un système de traitement électronique ou informatique. Ce système de traitement peut être réalisé sous forme d'un microprocesseur ou d'une puce électronique et configuré pour recevoir et émettre des signaux. Ce système de traitement communique notamment avec les moyens d'affichage des organes de commande et de mesure et/ou de détection de l'installation. Grâce à une telle installation, on obtient un traitement rapide et efficace de l'eau avec une installation d'encombrement réduit, de faible coût et de maintenance aisée.

## Revendications

1. Installation de traitement et de distribution d'eau, du type comprenant un bac (1) disconnecteur équipé d'une entrée (2) obturable d'alimentation en eau raccordable à une source (3) d'eau et d'un trop-plein (5), au moins un ballon (8) à vessie alimenté en entrée à partir du bac (1) disconnecteur et raccordable en sortie à un circuit (10) de distribution d'eau, des moyens (11) de traitement de l'eau disposés entre le bac (1) disconnecteur et le ou au moins un ballon (8) à vessie, au moins le bac (1) disconnecteur étant logé à l'intérieur d'une enceinte (7), de préférence de type armoire, **caractérisée en ce que** ladite installation comprend en outre des moyens de stockage (12) d'eau, dite grise, surmontant des moyens de coagulation (17) d'au moins une partie des impuretés contenues dans ladite eau, eux-mêmes surmontant des moyens de filtration (25) de la solution coagulée, ces moyens de stockage (12), de coagulation (17) et de filtration (25) superposés étant disposés au-dessus du bac (1) disconnecteur pour une alimentation généralement par le dessus, du bac (1) disconnecteur à partir des moyens de filtration (25) par écoulement gravitaire, les moyens de stockage (12) de coagulation (17), et de filtration (25) comportant chacun au moins une cuve (13 ; 18 ; 26) munie d'une entrée (14 ; 19 ; 27) d'alimentation en fluide, d'une sortie (15 ; 20 ; 28) d'évacuation de fluide, et pour les cuves (13 ; 18) des moyens de stockage (12) et de coagulation (17), d'un trop-plein (16, 21).

2. Installation selon la revendication 1,
**caractérisée en ce que** les trop-pleins (16, 21) des moyens de stockage (12) d'eau grise et des moyens de coagulation (17) débouchent dans un collecteur (33) de trop-pleins commun se présentant sous forme d'un conduit de type colonne, et **en ce que** le trop-plein (21) des moyens de coagulation (17) délimite entre la cuve (18) des moyens de coagulation (17) et le collecteur (33) de trop-pleins un circuit de circulation de fluide muni d'un venturi (22) apte à permettre la vidange partielle de la cuve (18) des moyens de coagulation (17) sous l'action d'un flux de fluide issu du trop-plein (16) des moyens de stockage (12) d'eau grise et circulant à l'intérieur du collecteur (33) de trop-pleins.

3. Installation selon l'une des revendications précédentes,
**caractérisée en ce que** la sortie (15) d'évacuation de la cuve (13) des moyens de stockage (12) d'eau grise est raccordée à l'entrée (19) d'alimentation de la cuve (18) des moyens de coagulation (17) par une liaison (23) obturable, **en ce que** la sortie (20) d'évacuation de la cuve (18) des moyens de coagulation (17) est raccordée à l'entrée (27) d'alimentation de la cuve (26) des moyens de filtration (25) par une liaison (29) obturable, et **en ce que** lesdites liaisons (23, 29) obturables, en particulier la partie desdites liaisons comprenant les moyens (24 ; 30) d'obturation de la liaison (23 ; 29), sont, de préférence, disposées au moins partiellement à l'extérieur desdites cuves (13, 18, 26).

4. Installation selon l'une des revendications précédentes,
**caractérisée en ce que** l'installation comporte en outre une unité (31) de pilotage et de surveillance de l'installation et une pompe (32), de préférence de relevage, d'alimentation en eau des moyens de stockage (12) d'eau grise, ladite unité (31) de pilotage, de préférence logée au moins partiellement à l'intérieur de l'enceinte (7), étant munie de moyens d'émission-réception de signaux aptes à émettre au moins des signaux de commande, ladite pompe (32) étant une pompe pilotée, apte à être pilotée à partir desdits signaux de commande, ladite pompe (32) comportant au moins un mode de fonctionnement dans lequel ladite pompe (32), à fonction d'organe de commande de la vidange partielle de la cuve (18) des moyens (17) de coagulation, est configurée pour remplir la cuve (13) des moyens de stockage (12) d'eau grise à un niveau de remplissage au moins égal au niveau du trop-plein (16) de ladite cuve (13).

5. Installation selon l'une des revendications précédentes,
**caractérisée en ce que** les moyens de coagulation (17) sont des moyens de coagulation par électrocoagulation.

6. Installation selon l'une des revendications précédentes,
**caractérisée en ce que** le débouché de l'entrée (2) d'alimentation en eau du bac (1) disconnecteur est disposé au-dessus du trop-plein (5) et est écarté du niveau d'eau maximal du bac (1) disconnecteur défini par le trop-plein (5) d'une distance au moins égale à 5 cm, de manière à éviter toute contamination de la source (3) d'eau par le contenu du bac (1) disconnecteur, et **en ce que** le trop-plein (5) du bac (1) disconnecteur est équipé de moyens de raccordement au collecteur (33) commun de trop-pleins.

7. Installation selon l'une des revendications précédentes,
**caractérisée en ce que** les moyens de filtration (25) comprennent au moins un filtre à sable.

8. Installation selon l'une des revendications précédentes,
**caractérisée en ce que** les moyens (11) de traitement de l'eau comprennent au moins des moyens (111) de filtration de l'eau et des moyens (112) d'émission de rayons UV, tels qu'une lampe UV, lesdits moyens (112) d'émission de rayons UV étant associés à des moyens (113) de contrôle de rayonnement des UV , lesdits moyens de contrôle comprenant au moins une photorésistance apte à émettre un signal lorsque la résistivité de la photorésistance, fonction de la quantité de lumière incidente émise par les moyens (112) d'émission de rayons UV, est inférieure à une valeur prédéterminée.

9. Installation selon l'une des revendications précédentes,
**caractérisée en ce que** la cuve (13) des moyens de stockage (12) d'eau grise et le bac (1) disconnecteur présentent une contenance maximale supérieure à celle des cuves (18, 26) des moyens de coagulation (17) et de filtration (25).

10. Procédé de traitement et de distribution d'eau à l'aide d'une installation conforme à la revendication 2 ou aux revendications 3 à 9 prises en combinaison avec la revendication 2, ladite installation fonctionnant par cycle de traitement **caractérisé en ce que**, au cours d'un cycle de traitement, le procédé comprend au moins :
- une étape de remplissage de la cuve (13) des moyens de stockage (12) d'eau grise,
- une étape de transfert d'au moins une partie du contenu de la cuve (13) des moyens de stockage (12) dans la cuve (18) des moyens de coagulation (17) jusqu'à atteindre, dans ladite cuve (18) des moyens de coagulation, un niveau de remplissage au moins égal au niveau du trop-plein (21),
- une étape de maintien de l'eau dans la cuve (18) des moyens de coagulation (17) pendant la durée nécessaire à la coagulation d'au moins une partie des impuretés contenues dans l'eau,
- une étape de vidange partielle de la cuve (18) des moyens de coagulation (17) par remplissage de la cuve (13) des moyens de stockage (12) d'eau grise à un niveau de remplissage au moins égal au niveau du trop-plein (16) de ladite cuve (13) pour un déversement d'une partie du contenu de la cuve (13) des moyens de stockage (12) d'eau grise dans le collecteur (33) de trop-pleins,
- une étape de transfert du reste du contenu de la cuve (18) des moyens de coagulation (17) dans la cuve (26) des moyens de filtration (25),
- une étape de transfert par écoulement gravitaire d'au moins une partie du contenu de la cuve (26) des moyens de filtration (25) dans le bac (1) disconnecteur.

## Patentansprüche

1. Anlage zur Aufbereitung und Verteilung von Wasser der Bauart, die ein Trennbecken (1), das mit einem verschließbaren Wasserversorgungseingang (2), der mit einer Wasserquelle (3) verbindbar ist, und einem Überlauf (5) ausgestattet ist, mindestens einen Blasenspeicher (8), der am Eingang aus dem Trennbecken (1) versorgt wird und am Ausgang an einen Wasserverteilungskreis (10) anschließbar ist, Wasseraufbereitungsmittel (11), die zwischen dem Trennbecken (1) und dem oder mindestens einem Blasenspeicher (8) angeordnet sind, umfasst, wobei mindestens das Trennbecken (1) in einem Containment (7), vorzugsweise von Typ Schrank, untergebracht ist, **dadurch gekennzeichnet, dass** die Anlage ferner Abwasserspeichermittel (12) über Koagulierungsmitteln (17) mindestens eines Teils der in dem Wasser enthaltenen Unreinheiten umfasst, die selbst über Filtermitteln (25) der koagulierten Lösung liegen, wobei diese übereinanderliegenden Speicher-(12), Koagulierungs- (17) und Filtermittel (25) über dem Trennbecken (1) für eine Versorgung im Allgemeinen von oben des Trennbeckens (1) ab den Filtermitteln (25) durch Abfließen durch Schwerkraft angeordnet sind, wobei die Speicher- (12), Koagulierungs- (17) und Filtermittel (25) jeweils mindestens einen Tank (13; 18; 26) aufweisen, der mit einem Fluidversorgungseingang (14; 19; 27), einem Fluidableitungsausgang (15; 20; 28), und für die Tanks (13; 18) der Speicher- (12) und Koagulierungsmittel (17), mit einem Überlauf (16, 21) ausgestattet ist.

2. Anlage nach Anspruch 1,
**dadurch gekennzeichnet, dass** die Überläufe (16, 21) der Abwasserspeichermittel (12) und der Koagulierungsmittel (17) in einen gemeinsamen Überlaufsammler (33) münden, der die Form einer Säulenleitung hat, und dass der Überlauf (21) der Koagulierungsmittel (17) zwischen dem Tank (18) der Koagulierungsmittel (17) und dem Überlaufsammler (33) einen Fluidzirkulationskreis begrenzt, der mit einem Venturi (22) ausgestattet ist, das imstande ist, die teilweise Entleerung des Tanks (18) der Koagulierungsmittel (17) unter der Einwirkung eines im Überlaufsammler (33) zirkulierenden Fluidstroms aus dem Überlauf (16) der Abwasserspeichermittel (12) zu erlauben.

3. Anlage nach einem der vorangehenden Ansprüche,
**dadurch gekennzeichnet, dass** der Ableitungsausgang (15) des Tanks (13) der Abwasserspeichermittel (12) mit dem Versorgungseingang (19) des Tanks (18) der Koagulierungsmittel (17) mittels einer verschließbaren Verbindung (23) verbunden ist, und dass der Ableitungsausgang (20) des Tanks (18) der Koagulierungsmittel (17) mit dem Versorgungseingang (27) des Tanks (26) der Filtermittel (25) mittels einer verschließbaren Verbindung (29) verbunden ist, und dass die verschließbaren Verbindungen (23, 29), insbesondere der Teil der Verbindungen, der die Verschlussmittel (24; 30) der Verbindung (23; 29) umfasst, vorzugsweise mindestens zum Teil außerhalb der Tanks (13, 18, 26) angeordnet sind.

4. Anlage nach einem der vorangehenden Ansprüche,
**dadurch gekennzeichnet, dass** die Anlage ferner eine Steuer- und Überwachungseinheit (31) der Anlage und eine Pumpe (32), vorzugsweise eine Hubpumpe, für die Versorgung der Abwasserspeichermittel (12) mit Wasser umfasst, wobei die Steuereinheit (31), die vorzugsweise mindestens zum Teil im Containment (7) untergebracht ist, mit Signalsende- und -empfangsmitteln ausgestattet ist, die imstande sind, mindestens Steuersignale zu senden, wobei die Pumpe (32) eine gesteuerte Pumpe ist, die mit Steuersignalen steuerbar ist, wobei die Pumpe (32) mindestens eine Betriebsart aufweist, in welcher die Pumpe (32) als Steuerorgan der teilweisen Entleerung des Tanks (18) der Koagulierungsmittel (17) konfiguriert ist, den Tank (13) der Abwasserspeichermittel (12) auf einen Füllstand zu füllen, der mindestens dem Überlaufniveau (16) des Tanks (13) entspricht.

5. Anlage nach einem der vorangehenden Ansprüche,
**dadurch gekennzeichnet, dass** die Koagulierungsmittel (17) Koagulierungsmittel durch Elektrokoagulation sind.

6. Anlage nach einem der vorangehenden Ansprüche,
**dadurch gekennzeichnet, dass** die Öffnung des Wasserversorgungseingangs (2) des Trennbeckens (1) über dem Überlauf (5) angeordnet ist und vom maximalen Wasserstand des Trennbeckens (1), der durch den Überlauf (5) festgelegt ist, in einem Abstand versetzt ist, der mindestens 5 cm beträgt, um jedwede Kontaminierung der Wasserquelle (3) durch den Inhalt des Trennbeckens (1) zu verhindern, und dass der Überlauf (5) des Trennbeckens (1) mit Anschlussmitteln an den gemeinsamen Überlaufsammler (33) ausgestattet ist.

7. Anlage nach einem der vorangehenden Ansprüche,
**dadurch gekennzeichnet, dass** die Filtermittel (25) mindestens einen Sandfilter umfassen.

8. Anlage nach einem der vorangehenden Ansprüche,
**dadurch gekennzeichnet, dass** die Wasseraufbereitungsmittel (11) mindestens Wasserfiltermittel (111) und Sendemittel (112) von UV-Strahlen wie eine UV-Lampe umfassen, wobei die Sendemittel (112) von UV-Strahlen mit Kontrollmitteln (113) der UV-Strahlung kombiniert sind, wobei die Kontrollmittel mindestens einen Fotowiderstand umfassen, der imstande ist, ein Signal zu senden, wenn der Widerstand des Fotowiderstands als Funktion der Menge des einfallenden Lichts, das von den Sendemitteln (112) der UV-Strahlen gesendet wird, unter einem vorbestimmten Wert liegt.

9. Anlage nach einem der vorangehenden Ansprüche,
**dadurch gekennzeichnet, dass** der Tank (13) der Abwasserspeichermittel (12) und das Trennbecken (1) ein maximales Fassungsvermögen aufweisen, das größer als das der Tanks (18, 26) der Koagulierungs- (17) und Filtermittel (25) ist.

10. Verfahren zur Aufbereitung und Verteilung von Wasser mit Hilfe einer Anlage nach Anspruch 2 oder nach den Ansprüchen 3 bis 9 in Kombination mit Anspruch 2, wobei die Anlage durch Aufbereitungszyklus funktioniert, **dadurch gekennzeichnet, dass** innerhalb eines Aufbereitungszyklus das Verfahren mindestens umfasst:
- einen Schritt des Füllens des Tanks (13) der Abwasserspeichermittel (12),
- einen Schritt der Überleitung mindestens eines Teils des Inhalts des Tanks (13) der Speichermittel (12) in den Tank (18) der Koagulierungsmittel (17), bis im Tank (18) der Koagulierungsmittel ein Füllstandsniveau erreicht ist, das mindestens dem Niveau des Überlaufs (21) entspricht,
- einen Schritt des Haltens des Wassers im Tank (18) der Koagulierungsmittel (17) während der notwendigen Koagulierungszeit mindestens eines Teils der im Wasser enthaltenen Unreinheiten,
- einen Schritt der teilweisen Entleerung des Tanks (18) der Koagulierungsmittel (17) durch Befüllen des Tanks (13) der Abwasserspeichermittel (12) auf ein Füllstandsniveau, das mindestens dem Niveau des Überlaufs (16) des Tanks (13) für ein Ablaufen eines Teils des Inhalts des Tanks (13) der Abwasserspeichermittel (12) in den Überlaufsammler (33) entspricht,
- einen Schritt der Überleitung des restlichen Inhalts des Tanks (18) der Koagulierungsmittel (17) in den Tank (26) der Filtermittel (25),
- einen Schritt der Überleitung durch Abfließen durch Schwerkraft mindestens eines Teils des Inhalts des Tanks (26) der Filtermittel (25) in das Trennbecken (1).

## Claims

1. A system for treating and distributing water, of the type comprising a disconnect tub (1) equipped with a closable inlet (2) for supplying water connectable to a water source (3) and an overflow well (5), at least one bladder balloon (8) supplied at its inlet from the disconnect tub (1) and connectable at its outlet to a water distribution circuit (10), means (11) for treating the water positioned between the disconnect tub (1) and the or at least one bladder balloon (8), at least one disconnect tub (1) being housed inside an enclosure (7), preferably of the cabinet type, **characterized in that** said system further comprises storage means (12) for water, called household wastewater, topping coagulation means (17) for coagulating at least part of the impurities contained in said water, which in turn top filtration means (25) for the coagulated solution, said superimposed storage (12), coagulation (17) and filtration (25) means being positioned above the disconnect tub (1) for a supply generally from above, of the disconnect tub (1) from the filtration means (25) by gravitational flow, the storage (12), coagulation (17) and filtration (25) means each comprising at least one tank (13; 18; 26) provided with a fluid supply inlet (14; 19; 27), a fluid discharge outlet (15; 20; 28), and for the tanks (13; 18), storage means (12) and coagulation means (17), with an overflow well (16, 21).

2. The system according to claim 1,
**characterized in that** the overflow wells (16, 21) of the household wastewater storage means (12) and coagulation means (17) emerge in a shared overflow collector (33) assuming the form of a column-type pipe, and **in that** the overflow well (21) of the coagulation means (17) delimits, between the tank (18) of the coagulation means (17) and the overflow collector (33), a fluid circulation circuit provided with a venturi (22) able to allow partial emptying of the tank (18) of the coagulation means (17) under the action of a fluid flow coming from the overflow well (16) of the household wastewater storage means (12) and circulating inside the overflow collector (33).

3. The system according to one of the preceding claims,
**characterized in that** the discharge outlet (15) of the tank (13) of the household wastewater storage means (12) is connected to the supply inlet (19) of the tank (18) of the coagulation means (17) by a closable link (23), **in that** the discharge outlet (20) of the tank (18) of the coagulation means (17) is connected to the supply inlet (27) of the tank (26) of the filtration means (25) by a closable link (29), and **in that** said closable links (23, 29), in particular the portion of said links comprising the closing means (24; 30) for the link (23; 29), are preferably positioned at least partially outside said tanks (13, 18, 26).

4. The system according to one of the preceding claims,
**characterized in that** the system further comprises a unit (31) for controlling and monitoring the system and a pump (32), preferably a lift pump, for supplying water to the household wastewater storage means (12), said control unit (31), preferably at least partially housed inside the enclosure (7), being provided with signal transceiver means able to transmit at least control signals, said pump (32) being a controlled pump, able to be controlled from said control signals, said pump (32) comprising at least one operating mode in which said pump (32), serving as a control member for the partial emptying of the tank (18) of the coagulation means (17), is configured to fill the tank (13) of the household wastewater storage means (12) to a filling level at least equal to the overflow level (16) of said tank (13).

5. The system according to one of the preceding claims,
**characterized in that** the coagulation means (17) are electrocoagulation coagulation means.

6. The system according to one of the preceding claims,
**characterized in that** the mouth of the water supply inlet (2) of the disconnect tub (1) is positioned above the overflow well (5) and is separated from the maximum water level of the disconnect tub (1) defined by the overflow well (5) by a distance at least equal to 5 cm, so as to avoid any contamination of the water source (3) by the contents of the disconnect tub (1), and **in that** the overflow well (5) of the disconnect tub (1) is equipped with means for connecting to the shared overflow collector (33).

7. The system according to one of the preceding claims, **characterized in that** the filtration means (25) comprises at least one sand filter.

8. The system according to one of the preceding claims,
**characterized in that** the water treatment means (11) comprise at least filtration means (111) for the water and means (112) for emitting UV rays, such as a UV bulb, said UV ray emitting means (112) being associated with means (113) for controlling UV radiation, said control means comprising at least one photoresist able to emit a signal when the resistivity of the photoresist, depending on the quantity of incident light emitted by the UV ray emitting means (112), is below a predetermined value.

9. The system according to one of the preceding claims,
**characterized in that** the tank (13) of the household wastewater storage means (12) and the disconnect tub (1) have a maximum content level greater than that of the tanks (18, 26) of the coagulation (17) and filtration (25) means.

10. A method for treating and distributing water using a system according to claim 2 or claims 3 to 9 combined with claim 2, said system operating by treatment cycle, **characterized in that**, during a treatment cycle, the method comprises at least:
- a step for filling the tank (13) of the storage means (12) with household wastewater,
- a step for transferring at least part of the contents of the tank (13) of the storage means (12) and the tank (18) of the coagulation means (17) until, in said tank (18) of the coagulation means, a filling level is reached at least equal to the level of the overflow well (21),
- a step for keeping the water in the tank (18) of the coagulation means (17) during the time necessary for the coagulation of at least part of the impurities contained in the water,
- a step for partially emptying the tank (18) of the coagulation means (17) by filling the tank (13) of the household wastewater storage means (12) to a filling level at least equal to the level of the overflow well (16) of said tank (13) for spilling of part of the content of the tank (13) of the household wastewater storage means (12) into the overflow well collector (33),
- a step for transferring the rest of the contents of the tank (18) of the coagulation means (17) into the tank (26) of the filtration means (25),
- a step for transferring, by gravitational flow, at least part of the contents of the tank (26) of the filtration means (25) into the disconnect tank (1).
